# EUROPEAN PATENT APPLICATION

(11) **EP 4 848 522 A1**
(43) Date of publication of application: **02.12.2026**
(21) Application number: 24919427.5
(22) Date of filing: 06.02.2024
(51) Int. Cl.: H02J 3/44

(54) **GRID-CONNECTED SYSTEM AND SYNCHRONIZATION METHOD**

(30) Priority: 22.01.2024 CN 202410089089
(71) Applicant: Sungrow Power Supply Co., Ltd., Hefei, Anhui 230088 (CN)
(72) Inventor: XIANG, Guohua, Hefei, Anhui 230088 (CN); MA, Xiangmao, Hefei, Anhui 230088 (CN); CHENG, Lin, Hefei, Anhui 230088 (CN)
(74) Representative: Zacco Norway AS
(86) International application number: PCT/CN2024/076233
(87) International publication number: WO 2025/156330

(57) **Abstract**

The present application discloses a grid-connected system and a synchronization method. The grid-connected system comprises a controller, a master switch, a transformer and a converter; an output end of the converter is connected to a low-voltage side of the transformer, and a high-voltage side of the transformer is configured to be connected to a power grid by means of the master switch; before the converter is connected to the grid, the master switch is turned off; the controller is used for controlling the converter to undergo off-grid starting, and on the basis of a phase comparison result between a voltage phase of the power grid and a voltage phase of the high-voltage side of the transformer, performing closed-loop control on a voltage frequency of the converter having undergone off-grid starting, so that the voltage phase of the high-voltage side of the transformer is consistent with the voltage phase of the power grid. A phase changed rapidly is converted into a frequency changed slowly, and the controller controls the frequency of an output voltage of the converter to gradually approach the frequency of the power grid, thereby realizing phase control and rapid synchronization between the phases on both sides of the master switch.

## Description

This application claims the priority to Chinese Patent Application No. 202410089089.7, titled "GRID-CONNECTED SYSTEM AND SYNCHRONIZATION METHOD", filed on January 22, 2024 with the China National Intellectual Property Administration, which is incorporated herein by reference in its entirety.

### FIELD

The present disclosure relates to the field of grid-connection technology, and in particular to a grid-connection system and a synchronization method.

### BACKGROUND

A grid-connection system includes a converter and a step-up transformer. For example, the grid-connection system may be used in large-scale photovoltaic power plants or distributed grid-connected power generation systems. The grid-connection system inverts energy from a direct-current side, and then feeds the inverted energy to a medium-and high-voltage power grid through the step-up transformer.

When the grid-connection system is a photovoltaic power generation grid-connection system, the grid-connection system may operate in a standby mode at night or on cloudy or rainy days when sunlight conditions are poor. However, the step-up transformer is always connected to the medium-and high-voltage power grid, resulting in no-load loss of the step-up transformer during the grid-connection system operating in the standby mode. To address the above issue, a main switch may be provided between a high-voltage side of the step-up transformer and the power grid. The main switch is opened at night, thereby reducing the no-load loss of the step-up transformer.

Unlike the related voltage synchronization during the grid-connection process of the converter, the converter cannot sample the grid voltage in real time due to that the main switch is opened, and the controller that obtains the grid voltage cannot directly control the output voltage of the converter. Therefore, the synchronization between the converter and the power grid cannot be achieved with the related control methods.

### SUMMARY

In view of this, a grid-connection system and a synchronization method are provided according to the present disclosure, to rapidly synchronize the voltages on both sides of a main switch.

A grid-connection system is provided according to the present disclosure. The grid-connection system includes a controller, a main switch, a transformer, and a converter. An output terminal of the converter is connected to a low-voltage side of the transformer, and a high-voltage side of the transformer is configured to be connected to a power grid via the main switch. Before the converter is connected to the power grid, the main switch is controlled to remain open. The controller is configured to: control the converter to be off-grid started, and perform closed-loop control to regulate a voltage frequency of the off-grid started converter based on a phase comparison result of a voltage phase of the power grid and a voltage phase at the high-voltage side of the transformer, to cause the voltage phase at the high-voltage side of the transformer to be consistent with the voltage phase of the power grid.

In an embodiment, the controller is further configured to perform closed-loop control to regulate a voltage amplitude of the off-grid started converter based on an amplitude comparison result of a voltage amplitude of the power grid and a voltage amplitude at the high-voltage side of the transformer, to cause the voltage amplitude at the high-voltage side of the transformer to be consistent with the voltage amplitude of the power grid.

In an embodiment, the grid-connection system includes N transformers and M converters, where M and N are both integers and M is greater than or equal to N. One transformer is connected to one or more converters.

In an embodiment, the controller is configured to perform closed-loop control to regulate the voltage amplitude of the off-grid started converter based on the amplitude comparison result of the voltage amplitude of the power grid and the voltage amplitude at the high-voltage side of the transformer by: obtaining the amplitude comparison result by using a regulator based on a difference between the voltage amplitude of the power grid and the voltage amplitude at the high-voltage side of the transformer; limiting the amplitude comparison result to obtain a voltage amplitude command; and sending the voltage amplitude command to the off-grid started converter to regulate the voltage amplitude of the off-grid started converter.

In an embodiment, the controller is configured to perform closed-loop control to regulate the voltage frequency of the off-grid started converter based on the phase comparison result of the voltage phase of the power grid and the voltage phase at the high-voltage side of the transformer by: obtaining a frequency regulation value by using a regulator based on a difference between the voltage phase of the power grid and the voltage phase at the high-voltage side of the transformer; limiting the frequency regulation value to obtain a limited frequency regulation value; superimposing the limited frequency regulation value with a value of a predetermined frequency to obtain a frequency command; and sending the frequency command to the off-grid started converter to regulate a phase of the off-grid started converter.

In an embodiment, the predetermined frequency is a rated frequency of the power grid or a voltage frequency of the power grid detected in real time.

In an embodiment, the controller is configured to perform closed-loop control to regulate the voltage frequency of the off-grid started converter based on the phase comparison result of the voltage phase of the power grid and the voltage phase at the high-voltage side of the transformer by: obtaining a frequency regulation value by using a regulator based on a difference between the voltage phase of the power grid and the voltage phase at the high-voltage side of the transformer; limiting the frequency regulation value to obtain a limited frequency regulation value; using the limited frequency regulation value as a frequency command; and sending the frequency command to the off-grid started converter to regulate a phase of the off-grid started converter.

In an embodiment, the controller is configured to change a frequency of a modulation wave of the off-grid started converter based on the frequency command to regulate the voltage phase at the high-voltage side of the transformer.

In an embodiment, the grid-connection system further includes a first voltage transformer and a second voltage transformer that are connected to the controller. The first voltage transformer is configured to detect a voltage of the power grid. The second voltage transformer is configured to detect a voltage at the high-voltage side of the transformer. The controller is configured to: obtain the voltage amplitude and the voltage phase of the power grid based on the voltage of the power grid, and obtain the voltage amplitude and the voltage phase at the high-voltage side of the transformer based on the voltage at the high-voltage side of the transformer.

In an embodiment, the controller is further configured to control the main switch to be closed, in response to the voltage amplitude at the high-voltage side of the transformer being consistent with the voltage amplitude of the power grid and the voltage phase at the high-voltage side of the transformer being consistent with the voltage phase of the power grid.

In an embodiment, a direct-current side of the converter is configured to be connected to at least one of a photovoltaic module or an energy storage battery.

A synchronization method for a grid-connection system is further provided according to the present disclosure. The grid-connection system includes a main switch, a transformer and a converter. An output terminal of the converter is connected to a low-voltage side of the transformer, and a high-voltage side of the transformer is connected to a power grid via the main switch. Before the converter is connected to the power grid, the main switch remains open. The synchronization method includes: controlling the converter to be off-grid started; and performing closed-loop control to regulate a voltage frequency of the off-grid started converter based on a phase comparison result of a voltage phase of the power grid and a voltage phase at the high-voltage side of the transformer, to cause the voltage phase at the high-voltage side of the transformer to be consistent with the voltage phase of the power grid.

In an embodiment, the synchronization method further includes: performing closed-loop control to regulate a voltage amplitude of the off-grid started converter based on an amplitude comparison result of a voltage amplitude of the power grid and a voltage amplitude at the high-voltage side of the transformer, to cause the voltage amplitude at the high-voltage side of the transformer to be consistent with the voltage amplitude of the power grid.

In an embodiment, the grid-connection system includes N transformers and M converters, where M and N are both integers and M is greater than or equal to N. One transformer is connected to one or more converters.

In an embodiment, the performing closed-loop control to regulate a voltage amplitude of the off-grid started converter based on an amplitude comparison result of a voltage amplitude of the power grid and a voltage amplitude at the high-voltage side of the transformer includes: obtaining the amplitude comparison result by using a regulator based on a difference between the voltage amplitude of the power grid and the voltage amplitude at the high-voltage side of the transformer; limiting the amplitude comparison result to obtain a voltage amplitude command; and sending the voltage amplitude command to the off-grid started converter to regulate the voltage amplitude of the off-grid started converter.

In an embodiment, the performing closed-loop control to regulate a voltage frequency of the off-grid started converter based on a phase comparison result of a voltage phase of the power grid and a voltage phase at the high-voltage side of the transformer includes: obtaining a frequency regulation value by using a regulator based on a difference between the voltage phase of the power grid and the voltage phase at the high-voltage side of the transformer; limiting the frequency regulation value to obtain a limited frequency regulation value; superimposing the limited frequency regulation value with a value of a predetermined frequency to obtain a frequency command; and sending the frequency command to the off-grid started converter to regulate a phase of the off-grid started converter.

In an embodiment, the predetermined frequency is a rated frequency of the power grid or a voltage frequency of the power grid detected in real time.

In an embodiment, wherein the performing closed-loop control to regulate a voltage frequency of the off-grid started converter based on a phase comparison result of a voltage phase of the power grid and a voltage phase at the high-voltage side of the transformer includes: obtaining a frequency regulation value by using a regulator based on a difference between the voltage phase of the power grid and the voltage phase at the high-voltage side of the transformer; limiting the frequency regulation value to obtain a limited frequency regulation value; using the limited frequency regulation value as a frequency command; and sending the frequency command to the off-grid started converter to regulate a phase of the off-grid started converter.

In an embodiment, the phase of the off-grid started converter is regulated by: changing a frequency of a modulation wave of the off-grid started converter based on the frequency command to regulate the voltage phase at the high-voltage side of the transformer.

In an embodiment, the synchronization method further includes: controlling the main switch to be closed, in response to the voltage amplitude at the high-voltage side of the transformer being consistent with the voltage amplitude of the power grid and the voltage phase at the high-voltage side of the transformer being consistent with the voltage phase of the power grid.

It can be seen that the present disclosure has following beneficial effects.

With the grid-connection system according to the embodiments of the present disclosure, synchronization between the output voltage of the converter and the grid voltage can be achieved through coordinated closed-loop control of the controller and the converter, without any additional synchronization device. For the conversion of phase control to frequency control, frequency changes may enables rapid phase changes. Therefore, by utilizing a slow-changing frequency to influence a fast-changing phase, a real-time tracking effect of "slowly catch up and quickly wait" for the voltage phase of the converter relative to the phase of the grid voltage can be achieved. For example, when the voltage phase of the converter lags behind the phase of the grid voltage, the frequency of the voltage of the converter is increased to catch up with the phase of the grid voltage; and when the voltage phase of the converter leads the phase of the grid voltage, the frequency of the output voltage of the converter is decreased to wait for the phase of the grid voltage.

### BRIEF DESCRIPTION OF THE DRAWINGS

FIG. 1 is a schematic diagram of a grid-connection system according to an embodiment of the present disclosure;
FIG. 2 is a schematic diagram of a grid-connection system according to another embodiment of the present disclosure;
FIG. 3 is a schematic diagram showing a voltage of a converter lagging behind a grid voltage according to an embodiment of the present disclosure;
FIG. 4 is a schematic diagram showing a voltage of a converter leading a grid voltage according to an embodiment of the present disclosure;
FIG. 5 is a schematic diagram showing a closed-loop control for a voltage amplitude according to an embodiment of the present disclosure;
FIG. 6 is a schematic diagram showing a closed-loop control for a voltage phase according to an embodiment of the present disclosure;
FIG. 7 is a schematic diagram showing a closed-loop control for a voltage phase according to another embodiment of the present disclosure; and

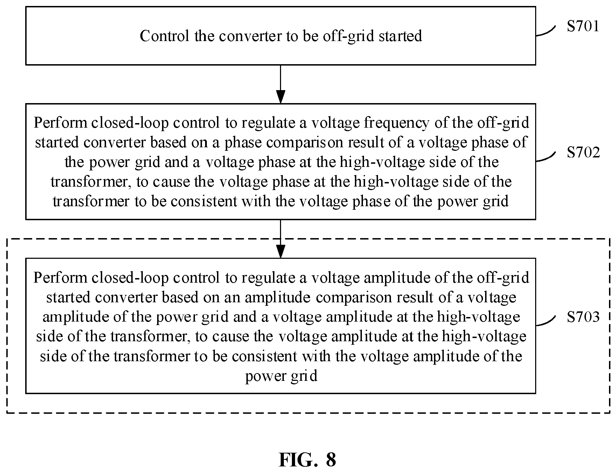

FIG. 8 is a flowchart of a synchronization method for a grid-connection system according to an embodiment of the present disclosure.

### DETAILED DESCRIPTION

In order to enable those skilled in the art to better understand and implement the technical solutions according to the embodiments of the present disclosure, an architecture of a grid-connection system is described below in conjunction with the accompanying drawings.

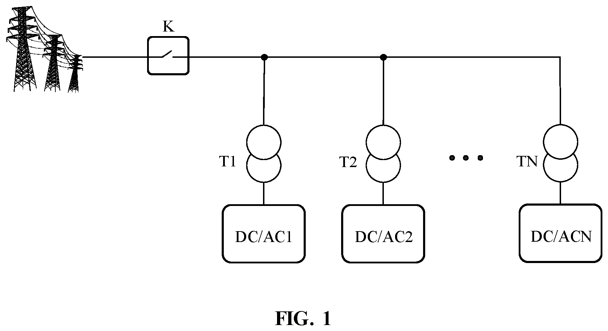

Referring to FIG. 1, FIG. 1 is a schematic diagram of a grid-connection system according to an embodiment of the present disclosure.

The grid-connection system includes M converter and N transformer, where M is an integer greater than or equal to 1, and M is greater than N. That is, there may be multiple converters or one converter, and generally there are multiple converters. N is an integer greater than or equal to 1. One transformer may be connected to one converter or may be connected to multiple converters. For example, one transformer may be connected to one or more centralized converters, or one transformer may be connected to multiple string converters.

The converter according to the embodiments of the present disclosure may be a bidirectional converter, which may perform a direct-current/alternating-current (DC/AC) conversion and perform an alternating-current/direct-current (AC/DC) conversion. The type of the direct-current power supply connected to a direct-current side of the converter is not limited in the embodiments of the present disclosure. For example, the direct-current power supply may include a photovoltaic module, or an energy storage battery, or both the photovoltaic module and the energy storage battery. The converter may be at least one of a photovoltaic converter or an energy storage converter. For example, a direct-current side of the photovoltaic converter is connected to the photovoltaic module, and a direct-current side of the energy storage converter is connected to the energy storage battery. It should be understood that when there are multiple modules, a part of the converters may be photovoltaic converters connected to photovoltaic component, and the other part of the converters may be energy storage converters connected to energy storage batteries, that is, the grid-connection system is a photovoltaic-energy storage grid-connection system. Alternatively, the grid-connection system may be a photovoltaic system or an energy storage system, which is not limited in the embodiments of the present disclosure, and the technical solutions according to the embodiments of the present disclosure may be applied to all of the above systems.

In the following embodiments, for ease of description and understanding, a schematic example where the number of the converter is equal to the number of the transformer is provided for illustration. In the embodiments of the present disclosure, examples in which N=M are taken for illustration.

In an embodiment as shown in FIG. 1, the converter is a DC/AC converter and N converters include DC/AC1, DC/AC2, ..., and DC/ACN. N transformers include T1, T2, ..., and TN. As can be seen from FIG. 1, an alternating-current side of DC/AC1 is connected to a low-voltage side of T1, an alternating current side of DC/AC2 is connected to a low-voltage side of T2, and an alternating current side of DC/ACN is connected to a low-voltage side of TN.

Each of the converters is connected to the power grid through a corresponding transformer. Since the output voltage of the converter is low, the transformer is generally a step-up transformer to match the grid voltage. The level of the grid voltage is not limited in the embodiments of the present disclosure. For example, the grid voltage may range from several kilovolts to tens of kilovolts.

For example, when the grid-connection system is a photovoltaic power generation grid-connection system, the grid-connection system may operate in a standby mode at night or on cloudy or rainy days when sunlight conditions are poor. However, the step-up transformer is always connected to the medium-and high-voltage power grid, resulting in no-load loss of the step-up transformer during the grid-connection system operating in the standby mode. To address the above issue, a main switch K may be provided between a high-voltage side of the step-up transformer and the power grid. The main switch K is opened at night, thereby reducing the no-load loss of the step-up transformer. When photovoltaic panels output energy, the converter gradually establish a voltage through a soft-start process, thereby synchronizing the voltages on both sides of the main switch K, and achieving a zero-impact closing function.

In the related process for connecting the converter to the power grid, synchronization with the power grid is achieved as follows. The converter samples the grid voltage in real time, calculates information such as a phase and an amplitude of the grid voltage, and then outputs an converter voltage that is synchronized with the power grid based on real-time information of the grid voltage.

Unlike the synchronization of the converter with the power grid in the related process for connecting the converter to the power grid, the converter and the controller in the grid-connection system according to the present disclosure are generally located far apart, which may result in a significant communication delay, such as on the order of microseconds or even hundreds of milliseconds. The communication delay may span several sine wave cycles, and results in a very slow communication response. The converter cannot quickly synchronize with the grid voltage detected by the controller, so that the converter cannot obtain the amplitude and the phase of the grid voltage. Thus, the controller cannot sample the grid voltage in real time (at a us level), and the controller, which can sample the grid voltage in real time, cannot directly control the output voltage of the converter. Therefore, synchronization with the medium-and high-voltage power grid cannot be achieved with the related control methods.

Some related synchronization techniques require additional devices for soft start or flexible switching, which may increase system cost and complicate hardware architecture.

To make the above objectives, features and advantages of the present disclosure more apparent and understandable, the embodiments of the present disclosure are described in detail below in conjunction with the drawings and the embodiments.

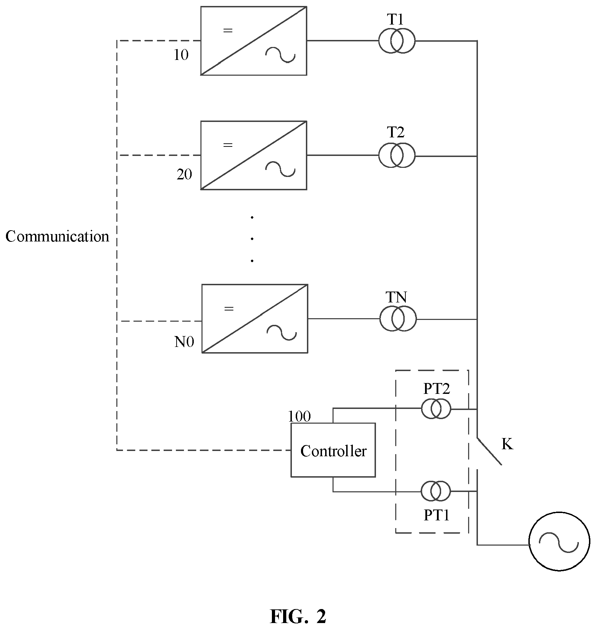

Referring to FIG. 2, FIG. 2 is a schematic diagram of a grid-connection system according to another embodiment of the present disclosure.

The grid-connection system according to the embodiment of the present disclosure includes: a controller 100, a main switch K, N transformers, and M converters, where M and N are both integers and M is greater than or equal to N. One transformer is connected to one or more converters. In the embodiment of the present disclosure, description is provided with taking M=N as an example. The N transformers include T1, T2, and up to TN, and the N converters include 10, 20, and up to N0.

An output terminal of each of the converters is connected to a low-voltage side of a corresponding transformer, and a high-voltage side of each of the transformers is configured to be connected the power grid through the main switch. That is, converter 10 is connected to the low-voltage side of transformer T1, converter 20 is connected to the low-voltage side of transformer T2, and converter N0 is connected to the low-voltage side of transformer TN. The high-voltage sides of transformers T1, T2, and up to TN are connected in parallel to a first terminal of the main switch K, and a second terminal of the main switch K is connected to the power grid. It should be understood that when the grid-connection system is a three-phase grid-connection system, the main switch K is a three-phase switch, such as the main switch K shown in FIG. 2.

In an embodiment, the grid-connection system according to an embodiment of the present disclosure further includes a first voltage transformer PT1 and a second voltage transformer PT2 that are connected to the controller 100.

The first voltage transformer PT1 is configured to detect a voltage of the power grid. In response to the main switch K being open, PT1 may only detect the voltage of the power grid.

The second voltage transformer PT2 is configured to detect an converter voltage at the high-voltage side of the transformer. In response to the main switch K being open, PT2 may only detect the voltage at the high-voltage side of the transformer. Since the high-voltage sides of all the transformers are connected in parallel, the voltages at the high-voltage sides of all the transformers are equal.

The grid-connection system according to the embodiment of the present disclosure includes: a controller, a main switch, N transformers, and N converters, where N is an integer greater than or equal to 1. The N transformers and the N converters are in one-to-one correspondence.

An output terminal of each of the converters is connected to a low-voltage side of a corresponding transformer, and a high-voltage side of each of the transformers is configured to be connected to the power grid via the main switch. Before the converter is connected to the power grid, the main switch is controlled to remain open.

A controller 100 is configured to: control at least one converter to be off-grid started, and perform closed-loop control to regulate a voltage frequency of the off-grid started converter based on a phase comparison result of a voltage phase of the power grid and a voltage phase at the high-voltage side of the transformer, to cause the voltage phase at the high-voltage side of the transformer to be consistent with the voltage phase of the power grid. The phase spans 360 degrees within one cycle of the grid voltage and changes rapidly, so that it is difficult to perform real-time tracking. Therefore, with the grid-connection system according to the embodiment of the present disclosure, phase control is converted to frequency control. The frequency changes slowly, for example, changes from 50Hz to 55Hz, with a relatively small range. By controlling the frequency which changes slowly, the phase of the output voltage of the converter is synchronized with the phase of the grid voltage.

The main switch K remains open. One or more converters may be off-grid started. The converters which are off-grid started are used for establishing an off-grid starting voltage. The main switch K is closed only when the voltages on both sides of the main switch K are consistent. That the voltages are consistent indicates that the amplitudes, frequencies and phases of the voltages are all consistent. That is, the main switch K is closed only when the voltage at the high-voltage side of the transformer is synchronized with the grid voltage, thereby avoiding an impact on the main switch K due to a difference between the voltages on both sides of the main switch K when closed.

The controller 100 may communicate with each of the converters.

The controller according to the embodiment of the present disclosure is further configured to perform closed-loop control to regulate a voltage amplitude of the off-grid started converter based on an amplitude comparison result of a voltage amplitude of the power grid and a voltage amplitude at the high-voltage side of the transformer, to cause the voltage amplitude at the high-voltage side of the transformer to be consistent with the voltage amplitude of the power grid.

With the grid-connection system according to the embodiments of the present disclosure, synchronization between the output voltage of the converter and the grid voltage can be achieved through coordinated closed-loop control of the controller and the converter, without any additional synchronization device. Closed-loop control is directly performed on the voltage, and phase control is converted to frequency control, thereby achieving a real-time tracking effect of "slowly catch up and quickly wait". That is, when the voltage phase of the converter lags behind the phase of the grid voltage, the frequency of the voltage of the converter is increased to catch up with the phase of the grid voltage; and when the voltage phase of the converter leads the phase of the grid voltage, the frequency of the output voltage of the converter is decreased to wait for the phase of the grid voltage.

The grid-connection system according to the embodiments of the present disclosure is not limited by the communication delay between the controller and the converters. Although the converters cannot sample the phase of the grid voltage in real time at the us level due to that the phase changes very rapidly, the phase which changes rapidly is converted to the frequency which changes slowly in the embodiments of the present disclosure, so that the controller controls the frequency of the output voltage of the converter to gradually approach the frequency of the grid voltage, thereby achieving the control of the phase.

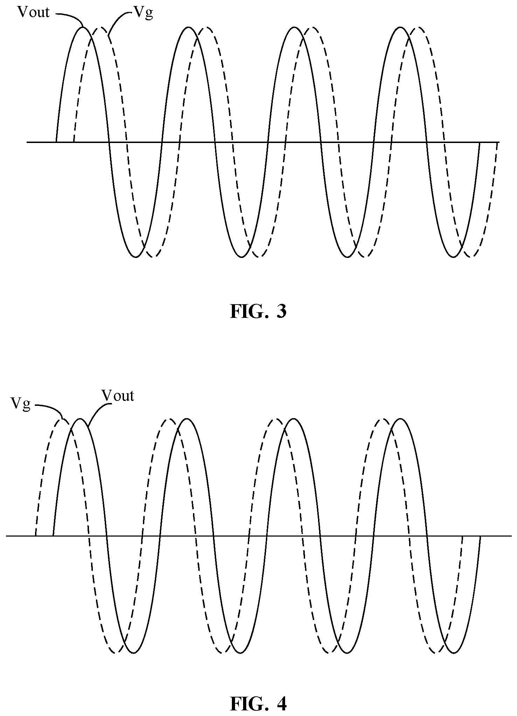

To intuitively understand the technical solutions according to the embodiments of the present disclosure, reference may be made to FIG. 3 and FIG. 4 which respectively show a schematic diagram showing a voltage of a converter lagging behind a grid voltage and a schematic diagram showing a voltage of a converter leading the grid voltage.

As shown in FIG. 3, both the output voltage Vout of the converter and the grid voltage Vg are sine waveforms. The phase of the output voltage Vout of the converter lags behind the phase of the grid voltage Vg. Therefore, it is required to increase the frequency of the output voltage of the converter. That is, the frequency of the output voltage of the converter is increased, thus the phase changes quickly, so that the phase of the output voltage of the converter catches up with the phase of the grid voltage Vg, thereby synchronizing the phase of the output voltage of the converter with the phase of the grid voltage Vg.

As shown in FIG. 4, the phase of the output voltage Vout of the converter leads the phase of the grid voltage Vg. Therefore, it is required to reduce the frequency of the voltage outputted by the converter. That is, the frequency of the output voltage of the converter is reduced, thus the phase changes slowly, so that the phase of the output voltage of the converter waits for the phase of the grid voltage Vg, thereby synchronizing the phase of the output voltage of the converter with the phase of the grid voltage Vg.

The synchronous control of the voltage amplitude according to the embodiments of the present disclosure is described below in conjunction with a schematic diagram showing a closed-loop control principle.

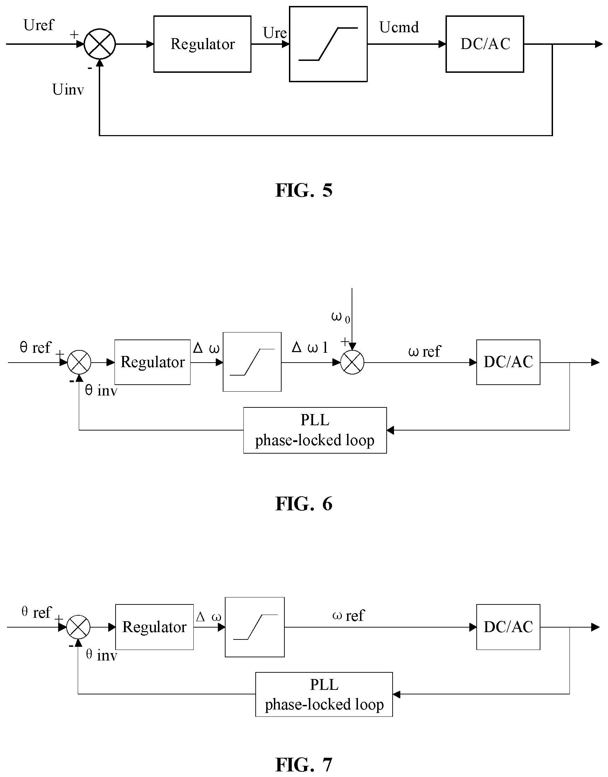

Referring to FIG. 5, FIG. 5 is a schematic diagram showing a closed-loop control for a voltage amplitude according to an embodiment of the present disclosure.

In the grid-connection system according to the embodiment of the present disclosure, a voltage amplitude Uref of the power grid is used as a reference value for the closed-loop control of the voltage amplitude. The controller is configured to perform closed-loop control to regulate the voltage amplitude of the off-grid started converter based on the amplitude comparison result of the voltage amplitude Uref of the power grid and the voltage amplitude Uinv at the high-voltage side of the transformer by: outputting a voltage amplitude regulation value by using a closed-loop regulator based on a difference between the voltage amplitude Uref of the power grid and the voltage amplitude Uinv at the high-voltage side of the transformer, for example, the regulator may output the voltage amplitude regulation value by using a proportional-integral algorithm or a proportional algorithm; limiting the amplitude comparison result Ure to obtain a voltage amplitude command Ucmd; and sending the voltage amplitude command Ucmd to the off-grid started converter DC/AC to regulate the voltage amplitude of the off-grid started converter DC/AC.

As can be seen from the closed-loop control described above, the voltage amplitude Uref of the power grid gradually approaches and eventually reaches consistency with the voltage amplitude Uinv at the high-voltage side of the transformer under the closed-loop control of the voltage amplitude according to the embodiment of the present disclosure. When the difference between the voltage amplitude of the power grid and the voltage amplitude at the high-voltage side of the transformer is controlled to be within an allowable range, it is determined that the voltage amplitude of the power grid and the voltage amplitude at the high-voltage side of the transformer are consistent.

Referring to FIG. 6, FIG. 6 is a schematic diagram showing a closed-loop control for a voltage phase according to an embodiment of the present disclosure.

In the grid-connection system according to the embodiments of the present disclosure, a voltage phase θref of the power grid is used as a reference value for the closed-loop control of the voltage phase. The controller is configured to perform closed-loop control to regulate the voltage frequency of the off-grid started converter based on the phase comparison result of the voltage phase θref of the power grid and the voltage phase θinv at the high-voltage side of the transformer by: obtaining a frequency regulation value θc by using a closed-loop regulator based on a difference between the voltage phase θref of the power grid and the voltage phase 8inv at the high-voltage side of the transformer, for example, the regulator may output the frequency regulation value Δω by using a proportional-integral algorithm or a proportional algorithm; limiting the frequency regulation value Δω to obtain a limited frequency regulation value Δω1 ; superimposing the limited frequency regulation value Δω1 with a value *ω*₀ of a predetermined frequency to obtain a frequency command ωref ; and sending the frequency command ωref to the off-grid started converter DC/AC to regulate the phase of the off-grid started converter DC/AC.

The predetermined frequency is not limited in the embodiments of the present disclosure. For example, the predetermined frequency may be a rated frequency of the power grid, such as 50Hz or 60Hz. Alternatively, the predetermined frequency may be a voltage frequency of the power grid which is detected in real time, such as 52Hz or 48Hz The above values are merely illustrative and may be set according to actual conditions.

Further, a closed-loop control of a voltage phase is provided according to an embodiment of the present disclosure, as shown in FIG. 7.

The difference between FIG. 7 and FIG. 6 is that FIG. 7 does not involve the frequency feedforward control. Instead, the frequency regulation value Δω outputted by the regulator is directly limited to obtain a limited frequency, the limited frequency is used as a frequency command ωref, and the frequency command ωref is sent to the off- grid started converter DC/AC to regulate the phase of the off- grid started converter DC/AC. In this way, the control process is simple without the frequency feedforward control.

In the grid-connection system according to the embodiments of the present disclosure, the manner in which the converter regulates the frequency of the output voltage is not limited. It should be understood that the converter regulates the output voltage generally by regulating a pulse width modulation (PWM) signal that drives a switch transistor. The PWM signal is generally generated based on a carrier wave and a modulation wave. In an embodiment, the controller is configured to change a frequency of a modulation wave of the off-grid started converter based on the frequency command, thereby changing the PWM signal. With different PWM signals, the switch transistor operates differently, thereby changing the frequency of the output voltage of the converter. By changing the frequency of the output voltage, the phase of the output voltage is changed, and then the phase of the voltage at the high-voltage side of the transformer is changed, so that the phase of the voltage at the high-voltage side of the transformer is synchronized with the phase of the grid voltage.

In the embodiments of the present disclosure, both the closed-loop control of the voltage amplitude and the closed-loop control of the voltage phase involve amplitude limiting. The amplitude limiting is performed to prevent a controlled object from deviating, ensuring that both the voltage amplitude and the voltage phase remain within a safe and controllable range.

In the above embodiments, the control of the voltage amplitude and the control of the voltage phase are described. The controller in the embodiments of the present disclosure is further configured to control the main switch to be closed, in response to the voltage amplitude at the high-voltage side of the transformer being consistent with the voltage amplitude of the power grid and the voltage phase at the high-voltage side of the transformer being consistent with the voltage phase of the power grid. That is, the main switch is closed only when both the amplitudes and the phases of the voltages on both sides of the main switch are consistent, thereby avoiding excessive impact on the main switch caused by different voltages on both sides of the main switch.

Based on the grid-connection system according to the above embodiments, a synchronization method for a grid-connection system is further provided according to an embodiment of the present disclosure. The synchronization method is described in detail below in conjunction with the accompanying drawings.

Referring to FIG. 7, FIG. 7 is a flowchart of a synchronization method for a grid-connection system according to an embodiment of the present disclosure.

A synchronization method for a grid-connection system is provided according to an embodiment of the present disclosure. The grid-connection system includes a main switch, a transformer and a converter. An output terminal of the converter is connected to a low-voltage side of the transformer, and a high-voltage side of the transformer is connected to a power grid via the main switch. Before the converter is connected to the power grid, the main switch remains open.

The synchronization method includes the following steps S701 and S702.

In S701, the converter is controlled to be off-grid started up. It should be understood that at least one converter of multiple converters may be controlled to be off-grid started up.

In S702, closed-loop control is performed to regulate a voltage frequency of the off-grid started converter based on a phase comparison result of a voltage phase of the power grid and a voltage phase at the high-voltage side of the transformer, to cause the voltage phase at the high-voltage side of the transformer to be consistent with the voltage phase of the power grid.

With the synchronization method for the grid-connection system according to the embodiments of the present disclosure, synchronization between the output voltage of the converter and the grid voltage can be achieved through coordinated closed-loop control of the controller and the converter, without any additional synchronization device. For the conversion of phase control to frequency control, frequency changes may enables rapid phase changes. Therefore, by utilizing a slow-changing frequency to influence a fast-changing phase, a real-time tracking effect of "slowly catch up and quickly wait" for the voltage phase of the converter relative to the phase of the grid voltage can be achieved. For example, when the voltage phase of the converter lags behind the phase of the grid voltage, the frequency of the voltage of the converter is increased to catch up with the phase of the grid voltage; and when the voltage phase of the converter leads the phase of the grid voltage, the frequency of the output voltage of the converter is decreased to wait for the phase of the grid voltage.

In another embodiment according to the present disclosure, the synchronization method may further include a step S703. In S703, closed-loop control is performed to regulate a voltage amplitude of the off-grid started converter based on an amplitude comparison result of a voltage amplitude of the power grid and a voltage amplitude at the high-voltage side of the transformer, to cause the voltage amplitude at the high-voltage side of the transformer to be consistent with the voltage amplitude of the power grid.

The order in which steps S702 and S703 are performed is not specifically limited in the embodiments of the present disclosure.

The performing closed-loop control to regulate a voltage amplitude of the off-grid started converter based on an amplitude comparison result of a voltage amplitude of the power grid and a voltage amplitude at the high-voltage side of the transformer includes: obtaining the amplitude comparison result by using a proportional-integral algorithm or a proportional algorithm based on a difference between the voltage amplitude of the power grid and the voltage amplitude at the high-voltage side of the transformer; limiting the amplitude comparison result to obtain a voltage amplitude command; and sending the voltage amplitude command to the off-grid started converter to regulate the voltage amplitude of the off-grid started converter.

The performing closed-loop control to regulate a voltage frequency of the off-grid started converter based on a phase comparison result of a voltage phase of the power grid and a voltage phase at the high-voltage side of the transformer includes: obtaining a phase comparison result by using a proportional-integral algorithm or a proportional algorithm based on a difference between the voltage phase of the power grid and the voltage phase at the high-voltage side of the transformer; limiting the phase comparison result to obtain a limited phase; superimposing the limited phase with a value of a predetermined frequency to obtain a frequency command; and sending the frequency command to the off-grid started converter to regulate a phase of the off-grid started converter.

The predetermined frequency is a rated frequency of the power grid or a voltage frequency of the power grid which is detected in real time.

The phase of the off-grid started converter is regulated by: changing a frequency of a modulation wave of the off-grid started converter based on the frequency command to regulate the voltage phase at the high-voltage side of the transformer.

The synchronization method for the grid-connection system according to the embodiments of the present disclosure further includes: controlling the main switch to be closed, in response to the voltage amplitude at the high-voltage side of the transformer being consistent with the voltage amplitude of the power grid and the voltage phase at the high-voltage side of the transformer being consistent with the voltage phase of the power grid.

The grid-connection system according to the embodiments of the present disclosure is not limited by the communication delay between the controller and the converters. Although the converters cannot sample the phase of the grid voltage in real time at the us level due to that the phase changes very rapidly, the phase which changes rapidly is converted to the frequency which changes slowly in the embodiments of the present disclosure, so that the controller controls the frequency of the output voltage of the converter to gradually approach the frequency of the grid voltage, thereby achieving the control of the phase.

It should be noted that all the embodiments in this specification are described in a progressive way, and each embodiment focuses on the differences from other embodiments. The same and similar parts among the embodiments can be referred to each other. The system or device disclosed in the embodiments correspond to the method disclosed in the embodiments, and therefore are described in a relatively simple way. Reference may be made to the description of the method for relevant details.

The disclosed embodiments are described above so that those skilled in the art can implement or use the present disclosure. Various modifications to these embodiments will be apparent to those skilled in the art. The general principles defined herein may be implemented in other embodiments without departing from the spirit or scope of the present application. Therefore, the present disclosure shall not be limited to the embodiments described herein, but have the widest scope that complies with the principle and novelty disclosed in this specification.

## Claims

1. A grid-connection system, **characterized in that**:
the grid-connection system comprises: a controller, a main switch, a transformer, and a converter,
an output terminal of the converter is connected to a low-voltage side of the transformer, a high-voltage side of the transformer is configured to be connected to a power grid via the main switch, and the main switch is controlled to remain open before the converter is connected to the power grid; and
the controller is configured to: control the converter to be off-grid started, and perform closed-loop control to regulate a voltage frequency of the off-grid started converter based on a phase comparison result of a voltage phase of the power grid and a voltage phase at the high-voltage side of the transformer, to cause the voltage phase at the high-voltage side of the transformer to be consistent with the voltage phase of the power grid.

2. The grid-connection system according to claim 1, wherein the controller is further configured to perform closed-loop control to regulate a voltage amplitude of the off-grid started converter based on an amplitude comparison result of a voltage amplitude of the power grid and a voltage amplitude at the high-voltage side of the transformer, to cause the voltage amplitude at the high-voltage side of the transformer to be consistent with the voltage amplitude of the power grid.

3. The grid-connection system according to claim 1 or 2, wherein the grid-connection system comprises N transformers and M converters, M and N are both integers and M is greater than or equal to N; and one transformer is connected to one or more converters.

4. The grid-connection system according to claim 2, wherein the controller is configured to perform closed-loop control to regulate the voltage amplitude of the off-grid started converter based on the amplitude comparison result of the voltage amplitude of the power grid and the voltage amplitude at the high-voltage side of the transformer by:
obtaining the amplitude comparison result by using a regulator based on a difference between the voltage amplitude of the power grid and the voltage amplitude at the high-voltage side of the transformer;
limiting the amplitude comparison result to obtain a voltage amplitude command; and
sending the voltage amplitude command to the off-grid started converter to regulate the voltage amplitude of the off-grid started converter.

5. The grid-connection system according to claim 1, wherein the controller is configured to perform closed-loop control to regulate the voltage frequency of the off-grid started converter based on the phase comparison result of the voltage phase of the power grid and the voltage phase at the high-voltage side of the transformer by:
obtaining a frequency regulation value by using a regulator based on a difference between the voltage phase of the power grid and the voltage phase at the high-voltage side of the transformer;
limiting the frequency regulation value to obtain a limited frequency regulation value;
superimposing the limited frequency regulation value with a value of a predetermined frequency to obtain a frequency command; and
sending the frequency command to the off-grid started converter to regulate a phase of the off-grid started converter.

6. The grid-connection system according to claim 5, wherein the predetermined frequency is a rated frequency of the power grid or a voltage frequency of the power grid detected in real time.

7. The grid-connection system according to claim 1, wherein the controller is configured to perform closed-loop control to regulate the voltage frequency of the off-grid started converter based on the phase comparison result of the voltage phase of the power grid and the voltage phase at the high-voltage side of the transformer by:
obtaining a frequency regulation value by using a regulator based on a difference between the voltage phase of the power grid and the voltage phase at the high-voltage side of the transformer;
limiting the frequency regulation value to obtain a limited frequency regulation value;
using the limited frequency regulation value as a frequency command; and
sending the frequency command to the off-grid started converter to regulate a phase of the off-grid started converter.

8. The grid-connection system according to any one of claims 5 to 7, wherein the controller is configured to change a frequency of a modulation wave of the off-grid started converter based on the frequency command to regulate the voltage phase at the high-voltage side of the transformer.

9. The grid-connection system according to any one of claims 1 to 7, further comprising: a first voltage transformer and a second voltage transformer that are connected to the controller, wherein
the first voltage transformer is configured to detect a voltage of the power grid;
the second voltage transformer is configured to detect a voltage at the high-voltage side of the transformer; and
the controller is configured to: obtain the voltage amplitude and the voltage phase of the power grid based on the voltage of the power grid, and obtain the voltage amplitude and the voltage phase at the high-voltage side of the transformer based on the voltage at the high-voltage side of the transformer.

10. The grid-connection system according to any one of claims 1 to 7, wherein the controller is further configured to control the main switch to be closed, in response to the voltage amplitude at the high-voltage side of the transformer being consistent with the voltage amplitude of the power grid and the voltage phase at the high-voltage side of the transformer being consistent with the voltage phase of the power grid.

11. The grid-connection system according to claim 9, wherein a direct-current side of the converter is configured to be connected to at least one of a photovoltaic module or an energy storage battery.

12. A synchronization method for a grid-connection system, wherein the grid-connection system comprises a main switch, a transformer and a converter, an output terminal of the converter is connected to a low-voltage side of the transformer, a high-voltage side of the transformer is configured to be connected to a power grid via the main switch, and the main switch remains open before the converter is connected to the power grid; and
wherein the method is **characterized in**:
controlling the converter to be off-grid started; and
performing closed-loop control to regulate a voltage frequency of the off-grid started converter based on a phase comparison result of a voltage phase of the power grid and a voltage phase at the high-voltage side of the transformer, to cause the voltage phase at the high-voltage side of the transformer to be consistent with the voltage phase of the power grid.

13. The synchronization method according to claim 12, further comprising: performing closed-loop control to regulate a voltage amplitude of the off-grid started converter based on an amplitude comparison result of a voltage amplitude of the power grid and a voltage amplitude at the high-voltage side of the transformer, to cause the voltage amplitude at the high-voltage side of the transformer to be consistent with the voltage amplitude of the power grid.

14. The synchronization method according to claim 12 or 13, wherein the grid-connection system comprises N transformers and M converters, M and N are both integers and M is greater than or equal to N; and one transformer is connected to one or more converters.

15. The synchronization method according to claim 13, wherein the performing closed-loop control to regulate a voltage amplitude of the off-grid started converter based on an amplitude comparison result of a voltage amplitude of the power grid and a voltage amplitude at the high-voltage side of the transformer comprises:
obtaining the amplitude comparison result by using a regulator based on a difference between the voltage amplitude of the power grid and the voltage amplitude at the high-voltage side of the transformer;
limiting the amplitude comparison result to obtain a voltage amplitude command; and
sending the voltage amplitude command to the off-grid started converter to regulate the voltage amplitude of the off-grid started converter.

16. The synchronization method according to claim 12 or 13, wherein the performing closed-loop control to regulate a voltage frequency of the off-grid started converter based on a phase comparison result of a voltage phase of the power grid and a voltage phase at the high-voltage side of the transformer comprises:
obtaining a frequency regulation value by using a regulator based on a difference between the voltage phase of the power grid and the voltage phase at the high-voltage side of the transformer;
limiting the frequency regulation value to obtain a limited frequency regulation value;
superimposing the limited frequency regulation value with a value of a predetermined frequency to obtain a frequency command; and
sending the frequency command to the off-grid started converter to regulate a phase of the off-grid started converter.

17. The synchronization method according to claim 16, wherein the predetermined frequency is a rated frequency of the power grid or a voltage frequency of the power grid detected in real time.

18. The synchronization method according to claim 12 or 13, wherein the performing closed-loop control to regulate a voltage frequency of the off-grid started converter based on a phase comparison result of a voltage phase of the power grid and a voltage phase at the high-voltage side of the transformer comprises:
obtaining a frequency regulation value by using a regulator based on a difference between the voltage phase of the power grid and the voltage phase at the high-voltage side of the transformer;
limiting the frequency regulation value to obtain a limited frequency regulation value;
using the limited frequency regulation value as a frequency command; and
sending the frequency command to the off-grid started converter to regulate a phase of the off-grid started converter.

19. The synchronization method according to any one of claims 16 to 18, wherein the phase of the off-grid started converter is regulated by:
changing a frequency of a modulation wave of the off-grid started converter based on the frequency command to regulate the voltage phase at the high-voltage side of the transformer.

20. The synchronization method according to any one of claims 12 to 18, further comprising: controlling the main switch to be closed, in response to the voltage amplitude at the high-voltage side of the transformer being consistent with the voltage amplitude of the power grid and the voltage phase at the high-voltage side of the transformer being consistent with the voltage phase of the power grid.
